# EUROPÄISCHE PATENTSCHRIFT

(11) **EP 0 751 848 B1**
(45) Veröffentlichungstag und Bekanntmachung des Hinweises auf die Patenterteilung: **10.03.1999**
(21) Anmeldenummer: 95941239.6
(22) Anmeldetag: 23.12.1995
(51) Int. Cl.: B23K 33/00, B23C 5/00

(54) **SCHWEISSVERBINDUNG, VERFAHREN ZUR HERSTELLUNG EINER SCHWEISSVERBINDUNG UND VORRICHTUNG ZUR HERSTELLUNG EINER AUSNEHMUNG AN DER SCHMALSEITE EINER PROFILSTANGE**
WELDED JOINT, METHOD OF MAKING A WELDED JOINT AND DEVICE FOR PRODUCING A GROOVE ON THE THIN SIDE OF A SHAPED BAR
JOINT DE SOUDURE, PROCEDE DE FABRICATION D'UN JOINT DE SOUDURE ET DISPOSITIF POUR REALISER UNE CAVITE DANS LE COTE MINCE D'UNE BARRE PROFILEE

(30) Priorität: 23.12.1994 DE 4446320
(43) Veröffentlichungstag der Anmeldung: 08.01.1997
(73) Patentinhaber: Horn, Klaus, 21409 Embsen (DE)
(72) Erfinder: Horn, Klaus, 21409 Embsen (DE)
(86) Internationale Anmeldenummer: IB9501150
(87) Internationale Veröffentlichungsnummer: WO9620064

(56) Entgegenhaltungen:
- DE-C- 950 710
- GB-A- 995 043

## Beschreibung

Die Erfindung bezieht sich auf eine Schweißverbindung, ein Verfahren und eine Vorrichtung nach dem Oberbegriff des Anspruchs 1, 10 sowie auf eine Vorrichtung zur Herstellung einer Ausnehmung an der Schmalseite einer Profilstange

Es ist bekannt, daß Kehlschweißnähte, aufgrund der beim Abkühlen des Schmelzbades und der Schweißnaht eintretenden Kontraktionskräfte zu Kontraktionsspannungen zwischen dem ersten und dem zweiten Verbindungsteil führen, die den zwischen diesen Verbindungsteilen eingeschlossenen Winkel zu verringern suchen. Diese Kontraktionsspannungen führen in der Praxis dazu, daß das erste plattenförmige Verbindungsteil im Bereich beider Schweißnähte etwas eingebogen wird, so daß an der Außenseite zwischen den Schweißnähten ein Wulst entsteht. Bei untergeordneten Bauteilen, bei denen ein solcher Wulst nicht stört, ist dieser Sachverhalt unerheblich. In vielen Fällen ist ein solcher Wulst jedoch unerwünscht, und es sind Maßnahmen zu ergreifen, den Wulst zu entfernen, was durch ein spezielles Richten durch besondere Erwärmung oder durch spanabhebende Bearbeitung erfolgen kann.

Das vorliegende Problem stellt sich auch beim Bau eines Schiffsrumpfes. Eine bekannte Schiffsrumpf-Bauweise besteht darin, die Außenwand des Schiffsrumpfes aus streifenförmigen Platten zu bilden, die in etwa horizontaler oder vertikaler Anordnung mit ihren Schmalseiten aneinandergefügt und an ihren Innenseiten durch aufgeschweißte Verstärkungsprofile verstärkt werden, die mit einer Schmalseite rechtwinklig auf der Breitseite der Wandplatte aufgesetzt und beidseitig durch eine vorbeschriebene Schweißverbindung verschweißt werden. Hierbei ergeben sich an der Außenseite der Wandplatten die vorbeschriebenen Wülste, die sich längs der Stege der Verstärkungsprofile erstrecken. Bei einem Schiff ist das Vorhandensein dieser Wülste nicht nur aus optischen Gründen unerwünscht, sondern die Wülste vergrößern auch insbesondere bei etwa vertikaler Anordnung den Wasserwiderstand, was zu einer Beeinträchtigung der Fahrleistung des Schiffes führt.

Ein anderes schweißtechnisches Problem besteht darin, daß aufgrund einer beim Schweißen stattfindenden Entgasung die Schweißnaht zumindest stellenweise porös wird, wo durch die Festigkeit und auch die Dichtung der Schweißnaht beeinträchtigt werden. Die Entgasung findet mit einem beträchtlichen Gasdruck statt, der durch die Erhitzung im Bereich des Schweißbades entsteht. Sofern der Gasdruck durch den vorhandenen Spalt zwischen den miteinander zu verschweißenden Teil nach hinten entweichen kann, wie es bei Schweißverbindungen im allgemeinen der Fall ist, kann das vorliegende Entgasungsproblem vernachlässigt werden. Bei einer dichten Anlage aneinander der beiden zu verschweißenden Verbindungsteile ist jedoch mit dem vorbeschriebenen Entgasungsproblem zu rechnen, und zwar insbesondere dann, wenn das Verstärkungsprofil mit seiner Schmalseite gegen die Breitseite der Wandplatte gedrückt wird, was bei einer Schweißverbindung aus besonderen Gründen der Fall sein kann und auch bei der vorbeschriebenen Schiffsbauweise durchgeführt wird.

Im weiteren wird das vorbeschriebene Entgasungsproblem dann bestärkt, wenn die beiden Schweißnähte zu beiden Seiten gleichzeitig hergestellt werden.

Der Erfindung liegt die Aufgabe zugrunde, eine Schweißverbindung oder ein Verfahren der eingangs angegebenen Arten so auszugestalten, daß die Verformungs- und/oder Entgasungsprobleme beim Schweißen beseitigt oder zumindest vermindert werden.

Diese Aufgabe wird durch die Merkmale der Ansprüche 1 oder 10 gelöst. Vorteilhafte Weiterbildungen der Erfindung sind in den Unteransprüchen beschrieben.

Bei der erfindungsgemäßen Schweißverbindung oder dem erfindungsgemaßen Verfahren ist bzw. wird der vorbeschriebene Verzug am ersten plattenförmigen Verbindungsteil aufgrund des Vorhandenseins der Ausnehmung wesentlich verringert oder verhindert bzw. vernachlässigbar gering. Dies ist darauf zurückzuführen, daß aufgrund des Auslaufs der Ausnehmung in die sich beim Schweißen aufgrund der erforderlichen Energieabgabe ergebende nachgiebige Schmelz- oder Glühzone ein unnachgiebiges Widerlager zwischen den beiden Schweißnähten entfällt und deshalb beim Schweißen und Erstarren der Schweißnähte dann, wenn nur eine Schweißnaht qeschweißt wird, die Kontraktion nicht um ein solches nahegelegenes Widerlager sondern um den der Schweißnaht gegenüberliegenden Eckbereich des zweiten stegförmigen Verbindungsteils stattfindet. Hierdurch ist die Verzugsbewegung bzw. Kippbewegung wesentlich verringert. Wenn beide Schweißnähte gleichzeitig geschweißt werden, findet unter dem Einfluß der Kontraktion im Bereich der Schweißnähte überhaupt keine Kippbewegung statt, weil hier ein Widerlager zwischen den Schweißnähten völlig fehlt und beide Schweißnähte sich gleichzeitig im Schmelzzustand befinden. Der Fortfall des oder der Widerlager ist dadurch vorgegeben, daß die zu beiden Seiten der Ausnehmung vorhandenen Anlagestege beim Schweißen erweichen und deshalb nachgeben, so daß das Kippmoment sich nicht schädlich auswirken kann.

Außerdem ergibt sich bei der erfindungsgemäßen Ausgestaltung durch die Ausnehmung ein in deren Längsrichtung gerichteter Kanal, durch den die beim Schweißen entstehenden Gase problemlos entweichen können, ohne durch die Schweißnaht hindurch austreten zu müssen.

Ferner wird durch eine erfindungsgemäße Ausnehmung ein sich bei einer üblichen Schweißnaht aufgrund der Fuge zwischen den Verbindungsteilen ergebender Kapillareffekt vermindert, wodurch Korrosion minimiert wird.

Durch die erfindungsgemäßen Maßnahmen wird somit nicht nur der Verzug verringert oder beseitigt, sondern es werden auch die Schweißnähte verbessert und insbesondere deren Festigkeit und Dichtheit vergrößert.

Die erfindungsgemäßen Verfahren nach den Ansprüchen 12 oder 13 ermöglichen eine leistungsstarke und kostengünstige Herstellung der Ausnehmung und im weiteren eine Anpassung der Herstellung der Schweißverbindung an eine relativ hohe, in einem Herstellungsbetrieb vorgegebene Fertigungsgeschwindigkeit.

Die Erfindung bezieht sich auch auf eine Vorrichtung nach Anspruch 14 bzw. 26, die sich durch eine einfache, funktionsfähige und kostengünstig herstellbare Konstruktion aus zeichnet, die sicher, störungsfrei und schnell arbeitet und außerdem eine lange Lebensdauer aufweist.

Von den vorbeschriebenen Vorteilen ist nicht nur eine erfindungsgemäß verschweißte Wandplatte für einen Schiffsrumpf sondern auch die Schiffswand und somit der Schiffsrumpf insgesamt betroffen. Deshalb bezieht sich die Erfindung auch auf eine mit der vorliegenden Schweißverbindung verstärkte Wandplatte für einen Schiffsrumpf oder auf den Schiffsrumpf insgesamt.

Nachfolgend werden die Erfindung und weitere durch sie erzielbare Vorteile anhand von bevorzugten Ausführungsbeispielen und Zeichnungen näher erläutert. Es zeigt
- Fig. 1: eine erfindungsgemäße Schweißverbindung im Querschnitt;
- Fig. 2: einen Teil der Außenwand eines Schiffsrumpfes mit erfindungsgemäßen Schweißverbindungen im Querschnitt;
- Fig. 3: eine Walzanordnung für ein Profilmaterial der erfindungsgemäßen Schweißvorrichtung;
- Fig. 4: eine Vorrichtung zur Durchführung des erfindungsgemäßen Verfahrens in der Vorderansicht;
- Fig. 5: die Vorrichtung in der Draufsicht;
- Fig. 6: ein Zerspanungswerkzeug der Vorrichtung in vergrößerter Draufsicht;
- Fig. 7: ein Zerspanungswerkzeug in abgewandelter Ausgestaltung.

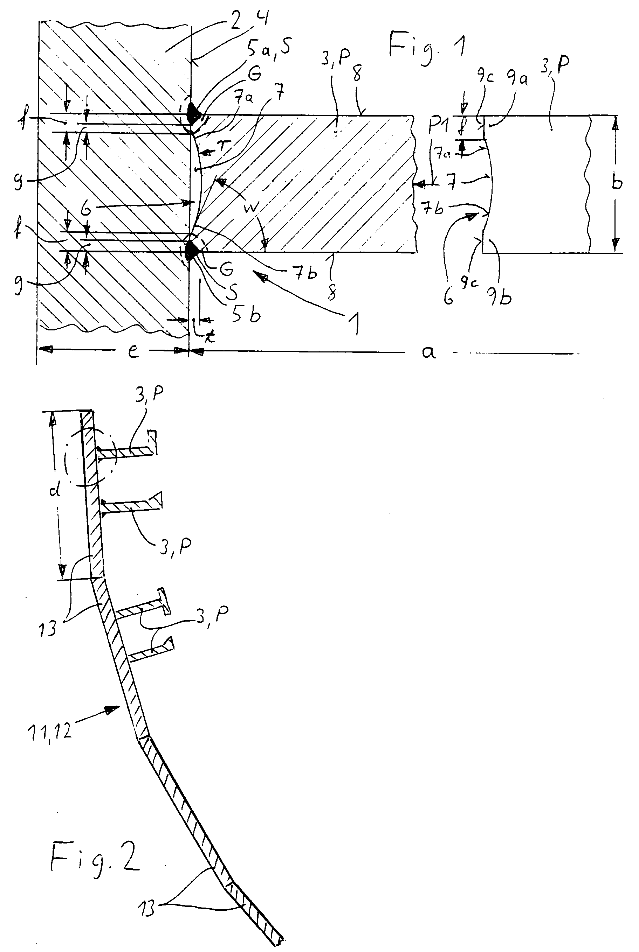

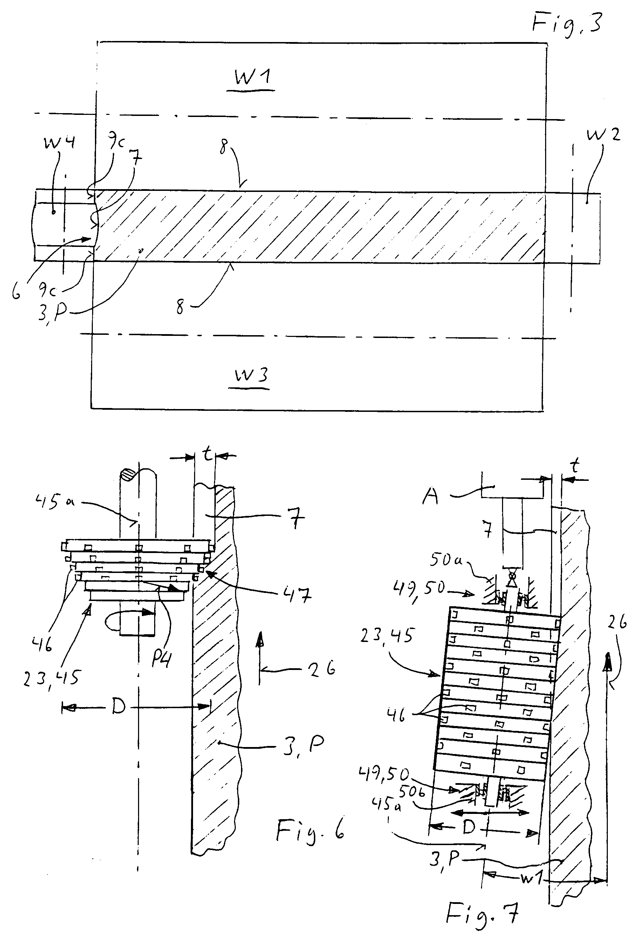

Die in Fig. 1 mit 1 bezeichnete Schweißverbindung dient dazu, ein plattenförmiges erstes Verbindungsteil 2 mit einem zweiten, stegförmigen Verbindungsteil 3 bei Anlage des zweiten Verbindungsteils 3 an der Breitseite 4 des ersten Verbindungsteils 2 durch beidseitiges Schweißen unlösbar zu verbinden. Die Schweißnähte sind mit 5a, 5b bezeichnet. Es kann sich um versenkte Kehlnähte oder gerundet vorstehende Kehlnähte handeln, wie es Fig. 1 zeigt. Bei dem zweiten Verbindungsteil 3 handelt es sich insbesondere um ein Profilmaterial bzw. einer Profilstange P mit einem hohen Steg, d.h. einer Steghöhe a, die ein Vielfaches einer Stegbreite b beträgt. Außerdem kann es sich um ein Profilmaterial handeln, daß in seinem dem ersten Verbindungsteil 2 abgewandten Bereich oder an diesem Ende durch seitliche Wülste oder Stege t- oder winkelförmig ausgebildet ist, wie es aus Fig. 2 zu entnehmen ist.

An der dem ersten Verbindungsteil 2 zugewandten Anlageseite, hier die Schmalseite 6 des zweiten Verbindungsteils 3, ist eine sich an dessen Längsrichtung erstreckende Ausnehmung 7 vorgesehen, deren Flanken 7a, 7b im Bereich oder nahe der jeweils zugehörigen Schweißnaht 5a, 5b auslaufen. Der Winkel w, den die Flanken 7a, 7b jeweils mit der Breitseite 8 einschließen, beträgt etwa 45 bis 88°, insbesondere etwa 80 bis 85°.

Bei der vorliegenden Ausgestaltung ist die Ausnehmung 7 im Querschnitt gerundet, insbesondere kreisbogenabschnittförmig gerundet. Dies ist aus mehreren Gründen vorteilhaft. Zum einen läßt sich eine solche Ausnehmung in einfacher Weise und mit hoher Leistung mit einem rotierenden Zerspanungswerkzeug fertigen. Zum anderen ist eine solche Ausnehmungsform aus Stabilitätsgründen von Vorteil, da die zu beiden Seiten der Ausnehmung 7 verbleibenden schmalseitigen Anlagestege 9a, 9b aufgrund der innen divergenten Querschnittsform stabil sind und beim Schweißen auch eine große Wärmemenge aufnehmen und in das zweite Verbindungsteil 3 weiterleiten können. Der Radius r der Fläche der Ausnehmung 7 beträgt vorzugsweise etwa 50 bis 125 mm, insbesondere etwa 100 mm.

Fig. 2 zeigt die Schweißverbindung 1 bei Anwendung an einer nur teilweise dargestellten Außenwand 11 eines nur so weit dargestellten Schiffsrumpfes 12. Die Außenwand 11 besteht aus einer Vielzahl stirnseitig und schmalseitig nebeneinander angeordneten Außenwandplatten 13, vorzugsweise rechteckiger Form, die innenseitig durch ein oder mehrere, einen Abstand voneinander aufweisende stegförmige zweite Verbindungsteile 3 verschweißt und verstärkt sind, bei denen es sich um ein leistenförmiges, winkelförmiges oder T-förmiges Profilmaterial handeln kann. Bei der vorliegenden Ausgestaltung kann die Steghöhe a etwa 80 bis 400 mm und die Stegdicke b etwa 8 bis 50 mm betragen. Die Länge der Außenwandplatten 13 beträgt ein Mehrfaches ihrer Breite d, beim vorliegenden Ausführungsbeispiel beträgt die Länge etwa 16m und d etwa 5 m. Die Dicke e der Außenwandplatte 13 entspricht üblichen Außenwanddicken von Schiffen, z.B. etwa 20 mm. Die Länge der Profilstange entspricht der Länge der Außenwandplatte 13.

Die Schweißverbindung 1 wird wie folgt hergestellt. Ein Stegförmiges Schweißverbindungsteil 3, daß in Fig. 1 rechts als Einzelteil dargestellt ist, wird mit seiner Schmalseite auf oder an die innere Breitseite 4 der Außenwandplatte 13 angesetzt und mittels einer durch einen Pfeil P1 angedeuteten Spannvorrichtung 14 gegen die Breitseite 4 gespannt, wobei die Anlagestege 9a, 9b mit ihren im wesentlichen ebenen Kopfflächen 9c an der Breitseite 4 anliegen. Dann können die Schweißnähte 5a, 5b von Hand oder mittels einer Schweißvorrichtung geschweißt werden, vorzugsweise gleichzeitig und einander gegenüberliegend. Beim Schweißen wird das Material im Bereich der Schweißnähte 5a, 5b erhitzt, wobei sich die Schmelzzone S im Bereich der zu verschweißenden Fuge bildet. Die Schmelzzone S kann sich auf der Seite des zugehörigen Anlagestegs 9a, 9b über dessen gesamte Breite f von 0 bis 10 mm, insbesondere etwa 2 bis 10 mm erstrecken. Sie kann sich jedoch auch nur über einen Teil der Breite f erstrecken, so daß ein innerer Breitenbereich g von einigen Millimetern, z.B. bis 3 oder bis 5 mm, nicht schmilzt, jedoch zum Glühen gebracht wird, siehe Glühzone G. Bei dieser Schweißverbindung 1 findet aufgrund der Kontraktion der jeweiligen Schweißnaht bzw. Schweißnähte 5a, 5b bei der Abkühlung keine oder nur eine vernachässigbare Biegung der Außenwandplatte 13 statt, da der oder die Anlagestege 9a, 9b aufgrund des Schmelz- oder relativ weichen Glühzustandes nachgiebig bzw. komprimierbar sind und deshalb kein Widerlager bilden, um das die Kontraktion die Verbiegung herbeiführen könnte.

Der Andruck P1 des stegförmigen Verbindungsteils 3 gegen die Breitseite 4 ist beim Schweißen unschädlich, weil die Länge der Schmelz- und Glühzone der Anlagestange 9a, 9b nur in einem verhältnismäßig kurzen Längenbereich der Schweißnähte 5a, 5b nachgiebig sind und im übrigen Bereich die Anlagestege 9a, 9b voll tragfähig sind und somit die Belastung des Andrucks P1 aushalten können, wobei das Widerstandsmoment der Profilstange P eine Durchbiegung der Prfoilstange P im Bereich der Schmelz- oder Glühzone S, G verhindert.

Die Ausnehmung 7 ergibt auch in vorteilhafter Weise einen sich längs der Verbindungsteile 2, 3 erstreckenden Kanal zum Abführen von beim Schweißen entstehenden Gasen. Letztere werden somit nach innen abgeführt, ohne daß sie aufgrund des entstehenden Gasdrucks durch das Schmelzbad beim Schweißen hindurch austreten und dabei die Schweißnaht porosieren bzw. perforieren könnten, was die Schweißnaht schwächen und undicht machen würde.

Die Ausnehmung 7 kann am zweiten Verbindungsteil 3 bereits bei dessen Herstellung in einem Zuge angeformt werden, z.B. durch Walzen, Ziehen oder Drücken. In Fig. 3 ist das zweite Verbindungsteil 3 als Profilstange P zwischen einander gegenüberliegenden auf ihren Umfang begrenzenden Walzen W1 bis 4 einer Walzvorrichtung dargestellt, wobei die Ausnehmung 7 mit einer entsprechend balligen und davon beidseitig zylindrischen Walze W4 eingewalzt wird.

Beim Ziehen oder Drücken bedarf es im Bereich der Ausnehmung 7 einer entsprechend konvexen Form der vorhandenen Matrize (nicht dargestellt).

Die Schweißvorrichtung 1 dient vorzugsweise zur Verbindung von zwei Verbindungsteilen 2, 3 aus Metall, insbesondere Stahl. Es ist jedoch auch möglich, die Verbindungsteile 2, 3 aus einem anderen schweißbaren Material, z.B. Kunststoff, mit einer erfindungsgemäßen Schweißverbindung 1 zu verbinden.

Bei den vorbschriebenen Schweißverfahren handelt es sich vorzugsweise um ein Schutzgas/Schweißverfahren, insbesondere um ein Hochgeschwindigkeits-Schutzgas/Schweißverfahren, das in der Fachsprache unter der Bezeichnung rapid arc-Schweißverfahren bekannt ist.

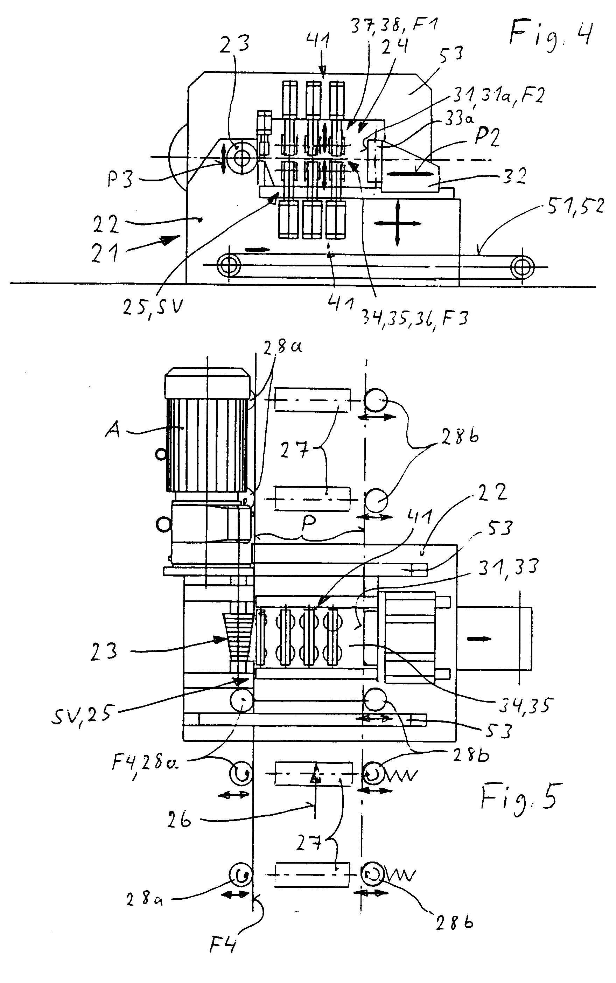

Es ist im Rahmen der Erfindung auch möglich und bei Verwendung eines handelsüblichen stegförmigen zweiten Verbindungsteils 3 erforderlich, die Ausnehmung 7 spanabhebend in die Schmalseite 6 einzuarbeiten. Hierzu dient die Vorrichtung gemäß Fig. 4 bis 7.

Die Hauptteile der Vorrichtung 21 sind ein Maschinengestell 22, an dem ein spanabhebendes Bearbeitungswerkzeug 23 neben einem freien Durchgang 24 gelagert ist, durch den das stegförmige zweite Verbindungsteil 3 als Profilstange in der erforderlichen Länge mittels einer Vorschubeinrichtung 25 in der Durchgangsrichtung 26 in einer Führung F mit den Führungsflächen F1 bis F4 schiebbar ist. Bei der Führung F kann sich um einen Rollendurchgang mit unterseitigen Rollen 27 und seitlichen Rollen 28a, 28b handeln. Zwecks Anpassung des Bearbeitungswerkzeugs 23 an die vorhandene Steghöhe a des zweiten Verbindungsteils 3 kann das Bearbeitungswerkzeug 23 und/oder ein ihm gegenüberliegendes Widerlager 31 quer zur Durchgangsrichtung 26 verstellbar und in der jeweiligen Verstellposition feststellbar sein. Bei der vorliegenden Ausgestaltung ist das Widerlager 31 entsprechend verstellbar und feststellbar, siehe Doppelpfeil P2. Hierzu kann ein geeigneter, im einzelnen nicht dargestellter Antrieb 32 dienen. Bei dem Widerlager 31 kann es sich um einen flächigen Stützkörper handeln mit einer Widerlagerfläche 33 oder mit einer oder mehreren eine Stütze bildenden Widerlagerrollen 33a (Fig. 4), die um quer zur Durchgangsrichtung 26 verlaufende Achsen frei drehbar sind oder zwecks Förderung der Profilstange P durch einen nicht dargestellten Antrieb antreibbar sein können. Wie bereits das Widerlager 31 können auch die in der Zeichnung rechten seitlichen Rollen 28b quer, hier horizontal, zur Durchgangsrichtung 26 verstellbar und in der jeweiligen Verstellposition fest oder nachgiebig positionierbar sein. Zur nachgiebigen Halterung können Federn, insbesondere Druckfedern dienen, die die Rollen 28b zum Durchgang 24 hin vorspannen. Die linken seitlichen Rollen 28a können im vorbeschriebenen Sinne fest oder verstellbar und in beiden dieser Fälle elastisch nachgiebig angeordnet sein. Die nachgiebige Halterung der Rollen 28a, 28b kann Unebenheiten oder gekrümmten Abschnitten der Profilstange P nachgeben. Außerdem ist hierdurch eine Spannvorrichtung SV geschaffen, die eine ruhige, saubere und schonende spanabhebende Bearbeitung ermöglicht.

Zwischen dem Widerlager 31 und dem mit einem Antriebsmotor A antreibbaren Bearbeitungswerkzeug 23 ist ein die untre Führungsfläche F3 bildender Träger 34 für die Profilstange P angeordnet, der eine ebene, horizontale Tragfläche 35 oder eine durch eine oder vorzugsweise mehrere miteinander angeordnete Rollen 36 (Fig. 4) gebildete Tragfläche aufweist. Dem Träger 34 gegenüberliegend ist ein Niederhalter 37 am Maschinengestell 22 gelagert. Der Träger 34 und/oder der Niederhalter sind vorzugsweise durch vertikale Stangen mit an ihren freien Enden angeordneten Trag- bzw. Niederhalterteilen gebildet, bei denen es sich um frei drehbare oder angetriebene Rollen 38 handeln kann. Zwecks Anpassung an Profilstangen P unterschiedlicher Dicke b ist der Träger 34 und/oder der Niederhalter 37 vertikal verstellbar und in der jeweiligen Verstellposition feststellbar angeordnet. Hierdurch ist es möglich, die Höhenlage der Profilstange P an die Höhenlage des Bearbeitungswerkzeugs 23 anzupassen, wobei das Bearbeitungswerkzeug 23 in vertikaler Richtung unverstellbar angeordnet sein kann. Vorzugsweise ist das Bearbeitungswerkzeug 23 vertikal verstellbar und in der jeweiligen Verstellposition feststellbar, wie es in Fig. 1 durch den Doppelpfeil P3 dargestellt ist, der eine Führung und einen Bewegungsantrieb verdeutlichen soll.

Es ist für einen störungsfreien Betrieb vorteilhaft, den Träger 34 oder den Niederhalter 37 in vertikaler Richtung elastisch nachgiebig auszubilden, um Unebenheiten an der Profilstange P durch elastische Nachgiebigkeit ausgleichen zu können.

Im Rahmen der Erfindung ist es möglich, den Niederhalter 37 vertikal einstellbar und in der eingestellten Position feststellbar anzuordnen, wobei der Träger 34 eine elastische Hochhaltefunktion ausüben könnte.

Bei der vorliegenden Ausgestaltung sind der Träger 34 und/oder der Niederhalter 37 durch mehrere, vorzugsweise in zwei in Durchgangsrichtung hintereinanderliegenden und/oder drei oder vier quer dazu verlaufenden Reihen angeordnete Trag- oder Niederhalterstangen gebildet, bei denen es sich um Kolbenstangen jeweils eines Hydraulikzylinders 41 handeln kann, die jeweils an eine den Durchgang untergreifenden und übergreifenden Traverse befestigt sein können.

Die Vorschubvorrichtung für die Profilstange P kann durch eine besondere Schub- oder Zugvorrichtung oder dadurch gebildet sein, daß wenigstens ein Teil oder alle Rollen des Rollenganges, des Widerlagers 31, des Trägers 34 und/oder des Niederhalters 37 durch einen Antrieb antreibbar sind. Die Ausnehmung 7 kann durch Räumen mit einem entsprechenden Räumwerkzeug oder durch Fräsen mit einem entsprechenden Fräswerkzeug ausgearbeitet werden. Die vorgenannten Bearbeitungswerkzeuge eignen sich insbesondere dafür, die Ausnehmung in einem Arbeitsgang auszuarbeiten, wobei das Bearbeitungswerkzeug 23 in einer Führung (nicht dargestellt) längs der Profilstange P oder wie im vorliegenden Fall die Profilstange P entlang dem Bearbeitungswerkzeug 23 bewegbar sein kann. Ein Räumungswerkzeug ist deshalb dazu geeignet, die Ausnehmung 7 in einem Durchgang auszuarbeiten, weil mehrere, in der Durchgangsrichtung 26 hintereinanderliegend angeordnete Räumwerkzeugschneiden progressiv in unterschiedlichen Schnittiefen angeordnet werden können, die jeweils für sich eine Schicht abtragen. Vorzugsweise erfolgt die spanabhebende Bearbeitung bei zwei gleichzeitig stattfindenden Relativbewegungen zwischen der Profilstange P und dem Bearbeitungswerkzeug 23, nämlich eine Längsbewegung und eine Rotationsbewegung für das Bearbeitungswerkzeug 23. Eine solche Bearbeitung kann ein Rotationsfräser 45 ausführen, dessen Drehachse längs der Durchgangsrichtung 26 gerichtet ist und der auf seinem Umfang mehrere verteilt angeordnete und befestigte, vorzugsweise radial einstellbare und insbesondere austauschbare Messer 46 aufweist, die an ihren der Durchgangsrichtung 26 entgegengesetzten Seite (Räumen) und vorzugsweise auch an ihrer radialen Außenfläche (Räumen/Fräsen) spanabhebend wirksam sind. Bei einer solchen Ausgestaltung ergibt sich eine aus der Umfangsgeschwindigkeit und der Vorschubgeschwindigkeit in Durchgangsrichtung resultierende, in Fig. 6 mit dem Pfeil P4 verdeutlichte Wirkrichtung, die umlaufend schräg zur Durchgangsrichtung 26 gerichtet ist und nach der die an den Schneidkanten der Messer 46 erforderlichen Keilwinkel, Freiwinkel und Spanwinkel zu bestimmen sind.

Ein solcher Fräser 45 ist insbesondere dann sehr leistungsfähig, wenn er wenigstens ein Messer 46 in mehreren, axial hintereinanderliegenden und in der Durchgangsrichtung 26 bezüglich der Drehachse 45a divergierenden oder bezüglich der Profilstange P konvergierenden, Stufen 47 aufweist. Bei einem solchen mehrstufigen Fräser 45 arbeitet das oder die jeder Stufe 47 zugehörigen Messer gleichzeitig in mehreren, der Anzahl der Stufen 47 entsprechenden Bearbeitungsschichten.

Bei Versuchen hat sich herausgestellt, daß ein Fräser mit einem Durchmesser D von etwa 200 mm sich gut eignet. Dabei reicht die kreisbogenabschnittförmige Krümmung aus, eine Ausnehmung 7 ausreichender Tiefe t von vorzugsweise etwa 1 bis 3 mm oder auch mehr einzuarbeiten.

Mit einem vorbeschriebenen Fräser können Vorschubgeschwindigkeiten in Durchgangsrichtung 26 von 10 bis 15 m/min und mehr problemlos erreicht werden. Beim vorliegenden Ausführungsbeispiel wird der Fräser 45 mit einer Umfangsgeschwindigkeit von etwa 220 m/min betrieben.

Im Rahmen der Erfindung ist es gemäß Fig. 7 auch möglich, anstelle eines kegelförmigen Fräsers gemäß Fig. 6 einen Fräser 45 mit bezüglich der Drehachse 45a gleichen Abständen seiner Messer 46, also einen zylindrischen Fräser, zu verwenden, der bezüglich der Vorschubrichtung 26 mit einem entgegen der Vorschubrichtung 26 offenen, spitzen Anstellwinkel w1 drehbar angeordnet ist. Vorzugsweise ist der Anstellwinkel mittels einer Einstellvorrichtung 49 verstellbar und in der jeweiligen Verstellposition feststellbar. Es ist vorteilhaft, den Schaft des Fräsers 45 bei beiden vorbeschriebenen Ausgestaltungen zu beiden Seiten des Fräsers 45 in Lagern 50a, 50b der Lagervorrichtung 50 zu lagern. Gemäß Fig. 7 werden vorzugsweise Pendellager verwendet. Das eine Lager, hier das der Durchgangsrichtung abgewandte Lager 50b, weist einen größeren Abstand von der Profilstange P auf, als das andere, hier das Lager 50a.

Es ist vorteilhaft, das oder die Messer 46 der kleinsten Stufe 47 als Schrupp-Werkzeuge auszubilden.

Im Betrieb der Vorrichtung 21 fallen die Bearbeitungsspäne auf eine Abführungsvorrichtung 51, die sich unter dem Bearbeitungswerkzeug 23 befindet. Die Abführungsvorrichtung 51 kann in vorteilhafter Weise durch ein umlaufendes Transportband 52 gebildet sein, auf das die Bearbeitungsspäne fallen und nach außen transportiert werden, insbesondere quer zur Durchgangsrichtung 26 und vorzugsweise zur dem Bearbeitungswerkzeug 23 abgewandten Seite.

Zur Stabilisierung des Maschinengestells 22 kann in Durchgangsrichtung 26 vor und/oder hinter dem Bearbeitungswerkzeug 23 ein den Durchgang 24 überbrückender Verstärkungsbügel 53 vorgesehen sein, der in seinen Fußbereichen mit dem Maschinengestell 22 verbunden ist.

## Patentansprüche

1. Schweißverbindung (1), bestehend aus einem ersten plattenförmigen Verbindungsteil (2) und einem zweiten stegförmigen Verbindungsteil (3), das bei Anlage an der Breitseite (4) des ersten Verbindungsteils (2) mit zwei Schweißnähten (5a, 5b) beidseitig verschweißt ist, dadurch gekennzeichnet, daß nur in der dem ersten Verbindungsteil (2) zugewandten oder daran anliegenden Anlagefläche (6) des zweiten Verbindungsteils (3) eine sich in der Längsrichtung der Schweißnähte (5a, 5b) erstreckende Ausnehmung (7) angeordnet ist, deren Flanken (7a, 7b) jeweils in die zugehörige Schmelzzone (S) bzw. Schweißnaht (5a, 5b) oder in die zugehörige beim Schweißen erglühende Glühzone (G) auslaufen.

2. Schweißverbindung nach Anspruch 1, dadurch gekennzeichnet, daß die Flanken (7a, 7b) mit den Seitenflächen (8) des zweiten Verbindungsteils (3) jeweils einen Winkel von etwa 45° bis 88°, insbesondere etwa 80° bis 85°, einschließen.

3. Schweißverbindung nach Anspruch 1 oder 2, dadurch gekennzeichnet, daß die Ausnehmung (7) eine rechteckförmige oder gekrümmte, insbesondere kreisbogenabschnittförmig gerundete Querschnittsform aufweist.

4. Schweißverbindung nach einem der vorherigen Ansprüche, dadurch gekennzeichnet, daß der Radius (r) der Fläche der Ausnehmung (7) 50 bis 125 mm, insbesondere 100 mm beträgt.

5. Schweißverbindung nach einem der vorherigen Ansprüche, dadurch gekennzeichnet, daß die Tiefe (t) der Ausnehmung (7) an ihren seitlichen Rändern und/oder in ihrem mittleren Bereich etwa 1 bis 5 mm, insbesondere etwa 2 bis 3 mm, beträgt.

6. Schweißverbindung nach einem der vorherigen Ansprüche, dadurch gekennzeichnet, daß die Tiefe (t) der Ausnehmung (7) etwa 1/20 bis 1/4, insbesondere etwa 1/10, der Dicke (b) des zweiten Verbindungselements (3) beträgt.

7. Schweißverbindung nach einem der vorherigen Ansprüche, dadurch gekennzeichnet, daß das erste Verbindungsteil (2) eine langgestreckte Platte ist und das zweite Verbindungsteil (3) eine sich parallel zum ersten Verbindungsteil (2) erstreckende Profilstange (P) ist.

8. Schweißverbindung nach einem der vorherigen Ansprüche, dadurch gekennzeichnet, daß die Profilstange (P) ein an ihrem dem ersten Verbindungsteil (2) abgewandten Endbereich durch einen seitlichen Wulst oder winkel- oder T-förmig stabilisiertes Profil ist.

9. Schweißverbindung nach Anspruch 7 oder 8,
gekennzeichnet durch
ihre Verwendung zum Verbinden von vorzugsweise äußeren Wandplatten (13) eines Schiffsrumpfes (12) mit an ihren inneren Breitseiten (4) anliegenden Verstärkungsprofilen (3).

10. Verfahren zur Herstellung einer Schweißverbindung nach einem der vorherigen Ansprüche, gekennzeichnet durch die Verwendung eines Profilmaterials mit einem das zweite Verbindungsteil (3) bildenden Anschweißsteg, wobei an der Schmalseite (6) des Anschweißstegs (3) eine sich in dessen Längsrichtung erstreckende Ausnehmung (7) angeordnet ist, deren Flanken (7a, 7b) in einem Abstand (f) von den 0 bis 10 mm von den Breitseiten des Anschweißstegs (3) auslaufen.

11. Verfahren nach Anspruch 10, dadurch gekennzeichnet, daß der Abstand (f) etwa 2 bis 10 mm, insbesondere etwa 4 bis 6 mm, beträgt.

12. Verfahren nach Anspruch 10 oder 11, dadurch gekennzeichnet, daß die Ausnehmung (7) gleichzeitig mit den gegenüberliegenden Seitenflächen des Profilmaterials gefertigt wird, vorzugsweise durch Walzen, Ziehen oder Drücken.

13. Verfahren nach Anspruch 10 oder 11, dadurch gekennzeichnet, daß die Ausnehmung (7) nach der profilmäßigen Fertigung des Profilmaterials spanabhebend, insbesondere durch Räumen und/oder Fräsen eingearbeitet wird.

14. Vorrichtung zur Herstellung einer Ausnehmung (7) an der Schmalseite einer Profilstange (3), wobei die Ausnehmung sich in der Längsrichtung der Profilstange erstreckt, umfassend ein Maschinengestell (22) mit einer Führung (F) in einem Durchgang (24) für eine Profilstange (P) mit einer Vorschubvorrichtung (25) zum Vorschieben der Profilstange (P) in der Führung (F) durch den Durchgang (24) und mit einem spanabhebenden Bearbeitungswerkzeug (23), das am Durchgang (24) gelagert ist und dessen Schneidkanten der Vorschubrichtung (26) entgegen angeordnet sind.

15. Vorrichtung nach Anspruch 14, dadurch gekennzeichnet, daß die Führung (F) und/oder das Bearbeitungswerkzeug (23) quer zur Vorschubrichtung (26) in zwei rechtwinklig zueinander gerichteten Verstellrichtungen, insbesondere horizontal und vertikal, verstellbar und in der jeweiligen Verstellposition feststellbar ist.

16. Vorrichtung nach Anspruch 14 oder 15, dadurch gekennzeichnet, daß eine oder beide Dimensionen der Querschnittsabmessungen der Führung (F) an unterschiedliche Querschnittsabmessungen der Profilstange (P) anpaßbar ist bzw. sind.

17. Vorrichtung nach einem der vorherigen Ansprüche 14 bis 16, dadurch gekennzeichnet, daß eine oder beide Führungsflächen (F1 bis F4) von einander gegenüberliegenden Führungsflächen der Führung (F) einer oder beider Querschnlttsdimensionen der Führung (F) aufeinanderzu oder voneinanderweg in Stufen oder kontinuierlich verstellbar und in der jeweiligen Verstellposition feststellbar ist bzw. sind.

18. Vorrichtung nach einem der vorherigen Ansprüche 14 bis 17, dadurch gekennzeichnet, daß der Führung (F) eine elastisch wirksame Spannvorrichtung (SV) zum Spannen der Profilstange (P) während des Durchgangs gegen eine oder beide von quer zueinander angeordneten Führungsflächen (F1 bis F4) zugeordnet ist.

19. Vorrichtung nach einem der vorherigen Ansprüche 14 bis 18, dadurch gekennzeichnet, daß eine von zwei einander gegenüberliegenden Führungsflächen (F1 bis F4) quer zu sich selbst verstellbar und elastisch in Richtung auf die andere Führungsfläche beaufschlagt ist.

20. Vorrichtung nach einem der vorherigen Ansprüche 14 bis 19, dadurch gekennzeichnet, daß der Durchgangsführung (24) dem Bearbeitungswerkzeug (23) gegenüberliegend ein Widerlager (31) zugeordnet ist, das eine sich parallel zur Führung (F) erstreckende Führungsfläche (33) für die Profilstange (P) aufweist.

21. Vorrichtung nach Anspruch 20, dadurch gekennzeichnet, daß das Widerlager (31) in einer in Richtung auf das Bearbeitungswerkzeug (23) gerichteten Führung verstellbar und in der jeweiligen Verstellposition feststellbar ist.

22. Vorrichtung nach einem der vorherigen Ansprüche 14 bis 21, dadurch gekennzeichnet, daß die Führung (F) für eine flache Anordnung der Profilstange (P) ausgebildet ist.

23. Vorrichtung nach einem der vorherigen Ansprüche 14 bis 22, dadurch gekennzeichnet, daß die Führungsfläche oder Führungsflächen (F1 bis F4) ebene Flächen (33, 35) sind oder jeweils durch eine oder mehrere Rollen (31a, 36) gebildet ist bzw. sind.

24. Vorrichtung nach einem der vorherigen Ansprüche 14 bis 23, dadurch gekennzeichnet, daß einer ebenen Führungsfläche (33) eine durch wenigstens eine Rolle (28a) gebildete Führungsfläche gegenüberliegt.

25. Vorrichtung nach einem der Ansprüche 14 bis 24, dadurch gekennzeichnet, daß das spanabhebende Bearbeitungswerkzeug (23) für eine um eine etwa parallel zur Vorschubrichtung (26) verlaufende Drehachse durch einen Antrieb (A) drehbare Drehung eingerichtet ist und ein oder mehrere Messer (46) in mehreren Stufen aufweist, die in der bezüglich der der Wirkrichtung (P4) der Messer (46) abgewandten axialen Richtung divergent hintereinanderliegend angeordnet sind.

26. Vorrichtung zur Herstellung einer Ausnehmung (7) an der Schmalseite einer Profilstange (3), wobei die Ausnehmung sich in der Längsrichtung der Profilstange erstreckt, mit einem spanabhebenden Bearbeitungswerkzeug (23) welches für eine durch einen Antrieb (A) um eine Drehachse (45a) drehbare Drehung eingerichtet ist, mehrere Messer (46) aufweist, die in eine sich aus der Drehrichtung und einer Vorschubrichtung (26) ergebenden resultierenden Wirkrichtung (P4) gerichtet und in axialen Abständen voneinander angeordnet sind, und für eine bezüglich der Vorschubrichtung (26) in unterschiedlichen spitzen Winkeln (w1) verstellbare und in der jeweiligen Verstellposition feststelbare Einstellung eingerichtet sind.

27. Vorrichtung nach Anspruch 26, dadurch gekennzeichnet, daß mehrere, auf dem Umfang verteilt angeordnete Messer (46) angeordnet sind.

28. Vorrichtung nach dem Ansprüche 25, dadurch gekennzeichnet, daß das oder die Messer (46) der kleinsten Stufe (47) Schrupp-Werkzeuge sind.

## Claims

1. A welded joint (1) consisting of a first plate-shaped connecting element (2) and a second web-shaped connecting element (3) which when resting against the broad side (4) of the first connecting element (2) is welded on both sides with two weld seams (5a, 5b), characterized in that there is provided only in that bearing face (6) of the second connecting element (3) which faces or is adjacent to the first connecting element (2) a recess (7) extending in the longitudinal direction of the weld seams (5a, 5b), the flanks (7a, 7b) of which each end in the associated melting zone (S) and/or weld seam (5a, 5b) or into the associated annealing zone (G) that glows during welding.

2. A welded joint according to claim 1 characterized in that the flanks (7a, 7b) each enclose with the lateral surfaces (8) of the second connecting element (3) an angle of approximately 45° to 88°, and in particular of approximately 80° to 85°.

3. A welded joint according to claim 1 or 2 characterized in that the recess (7) is provided with a cross-section shape that is rectangular or curved, and in particular rounded in the shape of a circular arc segment.

4. A welded joint according to any of the preceding claims characterized in that the radius (r) of the surface of the recess (7) is 50 to 125 mm, and in particular 100 mm.

5. A welded joint according to any of the preceding claims characterized in that the depth (t) of the recess (7) in its lateral edges and/or in its central area is approximately 1 to 5 mm, and in particular approximately 2 to 3 mm.

6. A welded joint according to any of the preceding claims characterized in that the depth (t) of the recess amounts to approximately 1/20 to 1/4, and in particular to approximately 1/10, of the thickness (b) of the second connecting element (3).

7. A welded joint according to any of the preceding claims characterized in that the first connecting element (2) is an elongated plate and that the second connecting element (3) is a profile rod (P) that extends in parallel to the first connecting element (2).

8. A welded joint according to any of the preceding claims characterized in that the profile rod (P) is a profile that is stabilized at its end area facing away from the first connecting element (2) by means of a lateral bulbular reinforcement or an angular or T-shaped stabilization.

9. A welded joint according to claim 7 or 8 characterized in that it is used to connect - preferably outer - wall panels (13) of a ship's hull (12) with the reinforcement profiles (3) being located close to its inner broad sides (4).

10. A method for producing a welded joint according to any of the preceding claims characterized by the use of a profile material with a welded web that forms the second connecting element (3), with a recess (7) that extends in the longitudinal direction of the welded web (3) being disposed at the narrow side (6) of the welded web (3) and having flanks (7a, 7b) which end at a distance (f) of 0 to 10 mm from the broad sides of the welded web (3).

11. A method according to claim 10 characterized in that the distance (f) amounts to approximately 2 to 10 mm, and in particular to approximately 4 to 6 mm.

12. A method according to claim 10 or 11 characterized in that the recess (7) is manufactured concurrently with the opposite lateral surfaces of the profile material, preferably by rolling, drawing or pressing.

13. A method according to claim 10 or 11 characterized in that, following the profiling of the profile material, the recess (7) is created by means of a metal-cutting technique, preferably by broaching and/or milling.

14. A device for the formation of a recess (7) at the narrow side of a profile rod (3) with the recess extending in the longitudinal direction of the profile rod, comprising a machine trestle (22) with a guideway (F) in a through passage (24) for a profile rod (P) with an advance feed appliance (25) for advancing the profile rod (P) in the guideway (F) through the through passage (24) and with a metal cutting machining tool (23) that is mounted on the through passage (24) and has cutting edges that face away from the advance feed direction (26).

15. A device according to claim 14 characterized in that the guideway (F) and/or the machining tool (23) is adjustable crosswise to the advance feed direction (26) in two adjustment directions, in particular horizontally and vertically, that are at right angles to each other, and can be locked in place in the respective adjustment position.

16. A device according to claim 14 or 15 characterized in that one or both dimensions of the cross-section of the guideway (F) is and/or are adaptable to the cross-sectional dimensions of the profile rod (P).

17. A device according to any of the preceding claims 14 to 16 characterized in that one or both of the guide surfaces (F1 to F4) is or are incrementally or continuously adjustable towards or away from each other by means of opposite guide surfaces of the guideway (F) of one or both of the cross-section dimensions of the guideway (F) and that said guide surface or surfaces can be locked in the respective adjustment position.

18. A device according to any of the preceding claims 14 to 17 characterized in that an elastically acting clamping fixture (SV) for clamping the profile rod (P) during passage against one or both of the guide surfaces (F1 to F4) positioned crosswise to each other is allocated to the guideway (F).

19. A device according to any of the preceding claims 14 to 18 characterized in that one of the two opposing guide surfaces (F1 to F4) is adjustable transversely to itself and is acted upon elastically in the direction of the other guide surface.

20. A device according to any of the preceding claims 14 to 19 characterized in that a buttress (31) located opposite to the machining tool (23) is allocated to the through passage guide (24) and that said buttress has a guide surface (33) for the profile rod (P) that extends in parallel to the guideway (F).

21. A device according to claim 20 characterized in that the buttress (31) is adjustable within a guide positioned in the direction towards the machining tool (23) and can be locked in place in the respective adjustment position.

22. A device according to any of the preceding claims 14 to 21 characterized in that the guideway (F) is designed for a flat arrangement of the profile rod (P).

23. A device according to any of the preceding claims 14 to 22 characterized in that the guide surface or guide surfaces (F1 to F4) are plane surfaces (33, 35) or is or are respectively formed by one or several rollers (31a, 36).

24. A device according to any of the preceding claims 14 to 23 characterized in that a guide surface formed by at least one roller (28a) is located opposite to a plane guide surface (33).

25. A device according to any of the claims 14 to 24 characterized in that the metal cutting machining tool (23) is designed for a rotation that is rotatable by means of a drive (A) about an axis of rotation that runs approximately in parallel to the advance feed direction (26) and has one or several blades (46) in several stages which are located divergently one behind the other in the axial direction facing away from the effective direction of cut (P4) of the blades (46).

26. A device for forming a recess (7) at the narrow side of a profile rod (3) where the recess extends in the longitudinal direction of the profile rod, with a metal cutting machining tool (23) that is designed for a rotation rotatable by means of a drive (A) about an axis of rotation (45a), and has blades (46) which are directed towards an effective direction of cut (P4) that results from the direction of rotation and an advance feed direction (26) and which are located at axial distances from each other and which are designed for a setting that is adjustable in relation to the advance feed direction (26) at different acute angles (w1) and which can be locked in place in the respective adjustment position.

27. A device according to claim 26, characterized in that several blades (46) are disposed at points distributed across the circumference.

28. A device according to claim 25, characterized in that the blade or blades (46) of the smallest stage (47) are roughing tools.

## Revendications

1. Joint de soudure (1) comportant une première pièce de liaison en forme de plaque (2) et une deuxième pièce de liaison en forme d'âme (3) qui est soudée des deux côtés lors de l'application sur le côté large (4) de la première pièce de liaison (2) avec deux cordons de soudure (5a, 5b), caractérisé en ce qu'une cavité (7) s'étendant dans le sens longitudinal des cordons de soudure (5a, 5b) n'est disposée que dans la surface de contact (5) de la deuxième pièce de liaison (3) tournée vers la première pièce de liaison (2) ou adjacente à celle-ci, cavité dont les flancs (7a, 7b) débouchent respectivement dans la zone de fusion correspondante (S) ou cordon de soudure (5a, 5b) ou dans la zone d'incandescence (G) en incandescence lors de la soudure.

2. Joint de soudure selon la revendication 1, caractérisé en ce que les flancs (7a, 7b) forment avec les surfaces latérales (8) de la deuxième pièce de liaison (3) respectivement un angle d'environ 45° à 88°, en particulier d'environ 80° à 85°.

3. Joint de soudure selon la revendication 1 ou 2, caractérisé en ce que la cavité (7) présente une forme de section rectangulaire ou incurvée, en particulier de forme arrondie en arc de cercle.

4. Joint de soudure selon l'une des revendications précédentes, caractérisé en ce que le rayon (r) de la surface de la cavité (7) s'élève à 50 à 125 mm, en particulier 100 mm.

5. Joint de soudure selon l'une des revendications précédentes, caractérisé en ce que la profondeur (t) de la cavité (7) sur ses bords latéraux et/ou dans sa zone médiane, s'élève à environ 1 à 5 mm, en particulier environ 2 à 3 mm.

6. Joint de soudure selon l'une des revendications précédentes, caractérisé en ce que la profondeur (t) de la cavité (7) s'élève à environ 1/20 jusqu'à ¼, en particulier 1/10 de l'épaisseur (b) du deuxième élément de liaison (3).

7. Joint de soudure selon l'une des revendications précédentes, caractérisé en ce que la première pièce de liaison (2) est une plaque allongée et la deuxième pièce de liaison (3) est une barre profilée (P) s'étendant parallèlement à la première pièce de liaison (2).

8. Joint de soudure selon l'une des revendications précédentes, caractérisé en ce que la barre profilée (P) est un profilé stabilisé sur sa zone terminale opposée à la première pièce de liaison (2) par un bourrelet latéral ou en forme angulaire ou de T.

9. Joint de soudure selon la revendication 7 ou 8, caractérisé par son utilisation pour lier de préférence des plaques de paroi externes (13) d'une coque de navire (125) avec des profilés de renforcement (3) adjacents à ses côtés larges intérieurs (4).

10. Procédé de fabrication d'un joint de soudure selon l'une des revendications précédentes, caractérisé par l'utilisation d'un matériau profilé avec une âme à souder formant la deuxième pièce de liaison (3), une cavité (7) s'étendant dans le sens longitudinal étant disposée sur le côté mince, cavité dont les flancs (7a, 7b) débouchent à une distance (f) de 0 à 10 mm des côtés larges de l'âme à souder (3).

11. Procédé selon la revendication 10, caractérisé en ce que la distance (f) s'élève à 2 à 10 mm, en particulier à 4 à 6 mm.

12. Procédé selon la revendication 10 ou 11, caractérisé en ce que la cavité est usinée en même temps avec les surfaces latérales opposées du matériau profilé, de préférence par laminage, étirage ou emboutissage.

13. Procédé selon la revendication 10 ou 11, caractérisé en ce que la cavité (7) est façonnée selon l'usinage en profilé du matériau profilé par enlèvement de copeaux, en particulier par brochage et/ou fraisage.

14. Dispositif pour réaliser une cavité (7) dans le côté mince d'une barre profilée (3), la cavité s'étendant dans le sens longitudinal de la barre profilée, comprenant un bâti de machine (22) avec un guidage (F) dans un passage (24) pour une barre profilée (P) comportant un dispositifd'avance (25) destiné à avancer la barre profilée (P) dans le guidage (F) à travers le passage (24), et un outil d'usinage à enlèvement de copeaux (23) qui est logé sur le passage (24) et dont les bords de coupe sont disposés dans le sens d'avance (26) opposé.

15. Dispositif selon la revendication 14, caractérisé en ce que le guidage (F) et/ou l'outil d'usinage (23) est réglable transversalement par rapport au sens d'avance (26) dans deux sens de réglage orientés orthogonalement, en particulier horizontalement et verticalement, et arrêtable dans la position de réglage respective.

16. Dispositif selon la revendication 14 ou 15, caractérisé en ce qu'une ou les deux dimensions des cotes de section du guidage (F) est ou sont adaptables à différentes cotes de section de la barre profilée (P).

17. Dispositif selon l'une des revendications précédentes 14 à 16, caractérisé en ce qu'une ou les deux surfaces de guidage (F1 à F4) de surfaces de guidage opposées du guidage (F) d'une ou des deux cotes de section du guidage (F) est ou sont réglables, en s'approchant ou s'éloignant, par palier ou en continu, et arrêtables dans la position de réglage respective.

18. Dispositif selon l'une des revendications précédentes 14 à 17, caractérisé en ce qu'un dispositif de serrage à action élastique (SV) destiné au serrage de la barre profilée (P) pendant le passage contre une ou les deux surfaces de guidage (F1 à F4) disposées transversalement l'une par rapport à l'autre est affecté au guidage (F).

19. Dispositif selon l'une des revendications précédentes 14 à 18, caractérisé en ce qu'une des deux surfaces de guidage (F1 à F4) se faisant face est réglable transversalement par rapport à elle-même et est sollicitée élastiquement dans le sens de l'autre surface de guidage.

20. Dispositif selon l'une des revendications précédentes 14 à 19, caractérisé en ce qu'une butée (31) faisant face à l'outil d'usinage (23) est affectée au guidage de passage (24), butée qui présente une surface de guidage (33), s'étendant parallèlement au guidage (F), pour la barre profilée (P).

21. Dispositif selon la revendication 20, caractérisé en ce que la butée (31) est réglable dans un guidage orienté dans le sens de l'outil d'usinage (23) et arrêtable dans la position de réglage respective.

22. Dispositif selon l'une des revendications précédentes 14 à 21 caractérisé en ce que le guidage est conçu pour une disposition plate de la barre profilée (P).

23. Dispositif selon l'une des revendications précédentes 14 à 22, caractérisé en ce que la surface de guidage ou les surfaces de guidage (F1 à F4) sont des surfaces planes (33, 35) ou est/sont formées respectivement par un ou plusieurs rouleaux (31a, 36).

24. Dispositif selon l'une des revendications précédentes 14 à 23, caractérisé en ce qu'une surface de guidage formée par au moins un rouleau (28) fait face à une surface de guidage plane (33).

25. Dispositif selon l'une des revendications 14 à 24, caractérisé en ce que l'outil d'usinage (23) à enlèvement de copeaux est aménagé pour une rotation pivotable par un entraînement (A) autour d'un axe de rotation s'étendant sensiblement parallèlement au sens d'avance (26), et présente un ou plusieurs couteaux (45), sur plusieurs niveaux, qui sont disposés d'une manière divergente, les uns derrière les autres, dans le sens axial opposé au sens d'action (P4) des couteaux (48).

26. Dispositif pour réaliser une cavité (7) dans le côté mince d'une barre profilée (3), la cavité s'étendant dis le sens longitudinal de la barre profilée, avec un outil d'usinage (23) à enlèvement de copeaux qui est aménagé pour une rotation pivotable autour d'un axe de rotation (45a) par un entraînement (A), et qui présente plusieurs couteaux (46) qui sont orientés dans un sens d'action résultant du sens de rotation et d'un sens d'avance (26) et qui sont disposés à des distances axiales les uns des autres, et qui sont aménagés pour un réglage réglable dans différents angles aigus (W1) concernant le sens de d'avance (26), et arrêtable dis la position de réglage respective.

27. Dispositif selon la revendication 26, caractérisé en ce que plusieurs couteaux (46) sont aménagés répartis sur le pourtour.

28. Dispositif selon la revendication 25 caractérisé en ce que le ou les couteaux (46) du niveau le plus petit (47) sont des outils de dégrossissage.
